# EUROPÄISCHE PATENTSCHRIFT

(11) **EP 3 445 544 B1**
(45) Veröffentlichungstag und Bekanntmachung des Hinweises auf die Patenterteilung: **03.06.2020**
(21) Anmeldenummer: 17718963.6
(22) Anmeldetag: 27.04.2017
(51) Int. Cl.: B25J 19/00, B25J 17/02, B25J 9/04, B25J 9/10, B25J 9/12

(54) **MOTORISIERTES GELENK FÜR EINEN PROGRAMMIERBAREN BEWEGUNGSAUTOMATEN**
MOTORIZED ARTICULATION FOR A PROGRAMMABLE MOTION AUTOMATON
ARTICULATION MOTORISÉE POUR UN AUTOMATE DE DÉPLACEMENT PROGRAMMABLE

(30) Priorität: 27.04.2016 LU 93044
(43) Veröffentlichungstag der Anmeldung: 27.02.2019
(73) Patentinhaber: Ovalo GmbH, 65555 Limburg (DE)
(72) Erfinder: GILGES, Siegmar, 65307 Bad Schwalbach (DE)
(74) Vertreter: Hoffmann, Jürgen
(86) Internationale Anmeldenummer: PCT/EP2017/060046
(87) Internationale Veröffentlichungsnummer: WO 2017/186844

(56) Entgegenhaltungen:
- EP-A1- 0 112 963
- WO-A1-2013/138912
- WO-A1-2015/115324

## Beschreibung

Die Erfindung betrifft ein motorisiertes Gelenk zum Verbinden von zwei relativ zueinander beweglichen Trägern eines programmierbaren Bewegungsautomaten, das einen Antriebsmotor und eine Feststellvorrichtung aufweist, wobei dem Antriebsmotor ein Spannungswellengetriebe triebtechnisch nachgeschaltet ist und dass die Feststellvorrichtung dazu ausgebildet und angeordnet ist, unmittelbar ein Getriebebauteil des Spannungswellengetriebes abzubremsen und zu arretieren, und wobei die Feststellvorrichtung ein reibschlüssig mit dem mittels der Feststellvorrichtung abbremsbaren Getriebebauteil verbundenes Sperrmittel aufweist, welches wenigstens ein Formschlussmittel aufweist, das im zugeschalteten Zustand der Feststellvorrichtung formschlüssig mit einem relativ zu einem Gehäuse oder einem Chassis drehfesten Gegenformschlussmittel zusammen wirkt.

Aus US 8,614,559 B2 ist ein programmierbares Robotersystem bekannt. Das Robotersystem beinhaltet einen Roboter mit einer Anzahl von einzelnen Armabschnitten, wobei benachbarte Armabschnitte jeweils durch ein Gelenk miteinander verbunden sind. Das Robotersystem umfasst ferner in wenigstens einem Gelenk einen steuerbaren Antrieb sowie ein Steuersystem zum Steuern der Antriebe. Das Robotersystem weist außerdem eine Benutzerschnittstelle auf, über die das Robotersystem programmiert werden kann. Das Gelenk weist ein Gehäuse und einen in dem Gehäuse angeordneten Motor mit einer Motorwelle auf, die relativ zu dem Gehäuse rotiert. In dem Gehäuse befindet sich außerdem eine Sicherheitsbremse, die eine mittels eines Elektromagneten aktivierbare Sperrklinge aufweist. Die Sperrklinke greift in der aktivierten Stellung in ein unmittelbar mit der Motorwelle reibschlüssig verbundenes Bauteil ein.

Aus EP 0 112 963 A1 ist ein hydraulisches Drehstellglied zur Verwendung in Industrierobotern und dergleichen bekannt. Der hydraulische Drehantrieb umfasst ein Spannungswellengetriebe und einen Hydraulikmotor, der vollständig in dem Gehäuse des Spannungswellengetriebes eingeschlossen ist.

Aus WO 2015/115324 A1 ist ein Reduktionsgetriebe mit einer Bremse bekannt. Die Bremse benötigt keine elektrische Energie und kann hierdurch einfach in eine Vorrichtung eingebaut werden, in der ein angetriebenes Element durch den Antrieb eines Motors betätigt wird.

Aus WO 2013/138912 A1 ist eine Orthese mit einem Antriebsmotor, einen Spannungswellengetriebe und einer drehmomentbegrenzenden Bremse bekannt. Einen programmierbaren Bewegungsautomaten betrifft diese Druckschrift nicht.

Es ist die Aufgabe der vorliegenden Erfindung, ein motorisiertes Gelenk für einen programmierbaren Bewegungsautomaten anzugeben, das ein präzises Einstellen zweier mittels des Gelenks verbundener Träger und ein zuverlässiges Arretieren der Träger relativ zueinander erlaubt.

Die Aufgabe wird durch ein motorisiertes Gelenk gemäß Anspruch 1 gelöst.

Die Erfindung hat den ganz besonderen Vorteil, dass ein präzises Abbremsen und Arretieren der Träger möglich ist, wobei die Bewegungsenergie der sich relativ zueinander bewegenden Träger und die Rotationsenergie der rotierenden Getriebebauteile unmittelbar und insbesondere unter Ausschluss der Abtriebswelle des Antriebsmotors, beispielsweise in ein Chassis oder ein Gehäuse, abgeleitet werden können. Die Abtriebswelle des Antriebsmotors ist auf diese Weise bei einem Abbremsvorgang zumindest teilweise von diesbezüglichen Kraft- und/oder Drehmomenteinwirkungen entkoppelt und kann daher dünner, leichter und besonders bauraumsparend ausgebildet sein.

Die Feststellvorrichtung kann insbesondere dazu dienen, das Gelenk in einem Notfall oder zum Durchführen einer Reparatur zu versteifen. Insbesondere kann die Feststellvorrichtung vorteilhaft dazu ausgebildet sein, die mittels des Gelenks verbundenen Träger im laufenden Betrieb relativ zueinander zunächst abzubremsen und dann zu arretieren.

Die Ausführung des Getriebes als Spannungswellengetriebe hat insbesondere den ganz besonderen Vorteil, dass ein besonders präzises Einstellen der beweglichen Träger relativ zueinander ermöglicht ist. Hierbei wird vorteilhaft ausgenutzt, dass Spannungswellengetriebe spielfrei sind und daher die vom Antriebsmotor erzeugten Drehmomente, insbesondere auch bei einer Richtungsumkehr, unmittelbar in eine entsprechende Relativbewegung der Träger übersetzt werden können.

Das mittels der Feststellvorrichtung abbremsbare Getriebebauteil kann beispielsweise ein Wellengenerator des Spannungswellengetriebes sein. Alternativ ist es auch möglich, langsamer rotierende Getriebebauteile abzubremsen und zu arretieren. Von besonderem Vorteil ist eine Ausführung, bei der das mittels der Feststellvorrichtung abbremsbare Getriebebauteil ein Flexspline, ein Circularspline oder ein Dynamicspline des Spannungswellengetriebes ist. Bei einer solchen Ausführung können die Auftretenden Kräfte und Momente auf sehr kurzem Weg und bei sehr geringer Belastung der triebtechnisch vorgelagerten Bauteile auf ein Gehäuse oder ein Chassis abgeleitet werden.

Das Spannungswellengetriebe kann als Ringgetriebe oder als Topfgetriebe ausgebildet sein. Bei einem als Ringgetriebe ausgebildeten Spannungswellengetriebe bietet es sich an, einen Circularspline oder einen Dynamicspline als Getriebeabtrieb auszulegen und direkt oder indirekt mit einem der Träger drehfest zu verbinden. Ein als Topfgetriebe ausgebildetes Spannungswellengetriebe kann insbesondere in der Weise realisiert sein, dass ein Flextopf als Getriebeabtrieb fungiert und direkt oder indirekt mit einem der Träger drehfest zu verbinden ist.

Bei einer ganz besonders vorteilhaften Ausführung lässt die Feststellvorrichtung im zugeschalteten Zustand bei Auftreten eines abtriebsseitigen Drehmomentes mit einem Wert über einem vorgegebenen oder vorgebbaren Wert zur Vermeidung einer Beschädigung eines Abtriebselements des Spannungswellengetriebes und der weiteren im Kraftfluss liegenden Bauteile des motorisierten Gelenks eine Bewegung des mittels des Feststellvorrichtung arretierten Getriebebauteils zu. Beispielsweise kann vorteilhaft vorgesehen sein, dass sich ein Sperrring beim Auftreten einer Überlast relativ zu dem zu arretierenden Bauteil, insbesondere unter Überwindung einer Reibkraft, drehen kann.

Der vorgegebene Wert entspricht vorzugsweise dem maximal zulässigen Betriebsdrehmoment, das an dem zu arretierenden Bauteil auftreten darf. Der Wert kann insbesondere auch unterhalb dieses Wertes liegen, um ein Sicherheitspolster zu implementieren. Insbesondere ist der vorgegebene Wert vorzugsweise derart gewählt, dass eine Beschädigung des Gelenks und/oder des Getriebes ausgeschlossen ist.

Eine solche Ausführung hat den ganz besonderen Vorteil, dass Drehmomentspitzen, die auf das Abtriebselement oder die weiteren im Kraftfluss liegenden Bauteile wirken, abgebaut werden können, ohne dass es zu einer Beschädigung des motorisierten Gelenks kommt. Zu derartigen Drehmomentspitzen kann es insbesondere im zugeschalteten Zustand der Feststellvorrichtung kommen, wenn äußere Kräfte auf die mittels des motorisierten Gelenks verbundenen Träger einwirken. Auf diese Weise kann vorteilhaft eine Beschädigung des motorisierten Gelenks, insbesondere des Spannungswellengetriebes des motorisierten Gelenks, vermieden werden, ohne dass das motorisierte Gelenk, und insbesondere die Getriebebauteile des Spannungswellengetriebes, vorsorglich überdimensioniert werden müssten, um die oben genannten Drehmomentspitzen verkraften zu können. Insoweit kann das motorisierte Gelenk - und insbesondere dessen Spannungswellengetriebe - vorteilhaft bei gleicher Lebensdauer seiner Komponenten kompakt, kleinbauend und bauraumsparend ausgebildet werden.

Die Feststellvorrichtung kann vorteilhaft als reibschlüssige Bremse ausgebildet sein oder zumindest eine reibschlüssige Bremse aufweisen. Hierdurch kann in einfacher und zuverlässiger Weise das arretierte Getriebebauteil in Stillstand gehalten werden, wobei jedoch beim Auftreten von besonders hohen Drehmomenten, insbesondere von Drehmomenten die einen vorgegebenen Wert überschreiten, ein Durchrutschen der reibschlüssigen Bremse erfolgt, so dass das arretierte Getriebebauteil und die weiteren im Kraftfluss liegenden Bauteile vor einer Beschädigung bewahrt bleiben.

Beispielsweise kann die Feststellvorrichtung eine Scheibenbremse aufweisen. Bei einer vorteilhaften Ausführung weist die Scheibenbremse eine Bremsscheibe auf, die drehfest mit dem abzubremsenden Getriebebauteil verbunden ist. Darüber hinaus kann ein Bremskrafterzeuger vorhanden sein, der auf die Bremsscheibe wirkt und der sich direkt oder indirekt an einem Gehäuse oder an einem Chassis des Spannungswellengetriebes und/oder des motorisierten Gelenks abstützt. Die Bremsscheibe kann vorteilhaft drehfest, jedoch in axialer Richtung verschiebbar auf einem mit dem abzubremsenden Getriebebauteil verbundenen Mitnehmer gelagert sein.

Der Bremskrafterzeuger kann beispielsweise in der Weise ausgebildet sein, dass er im zugeschalteten Zustand der Feststellvorrichtung ein Reibelement axial oder radial gegen die Bremsscheibe drückt. Insbesondere hierzu kann der Bremskrafterzeuger wenigstens einen Magneten, insbesondere einen Permanentmagneten und/oder einen Elektromagneten und/oder wenigstens ein Federelement aufweisen.

Bei einer besonderen Ausführung ist zum Lösen der Feststellvorrichtung eine, insbesondere elektrisch aktivierbare, Lösevorrichtung vorhanden. Beispielsweise kann die Lösevorrichtung einen Elektromagneten aufweisen, mittels dem das Reibelement von der Bremsscheibe, insbesondere gegen die Rückstellkraft eines Bremskrafterzeugers, entfernt werden kann.

Erfindungsgemäß weist die Feststellvorrichtung ein Sperrmittel auf, das reibschlüssig mit dem abzubremsenden Getriebebauteil verbunden ist. Das Sperrmittel weist ein Formschlussmittel auf, das im zugeschalteten Zustand der Feststellvorrichtung formschlüssig mit einem relativ zu einem Gehäuse oder einem Chassis des motorisierten Gelenks, insbesondere einem Gehäuse oder einem Chassis des Spannungswellengetriebes des motorisierten Gelenks, drehfesten Gegenformschlussmittel zusammenwirkt. Das Sperrmittel kann beispielsweise als Ring ausgebildet sein, der als Formschlussmittel wenigstens eine Ausnehmung aufweist, in die das Gegenformschlussmittel, beispielsweise in Form eines ausfahrbaren Sperrenstiftes, eingreifen kann. In vorteilhafter Weise kann das Sperrmittel mehrere Formschlussmittel, beispielsweise mehrere Ausnehmungen, aufweisen, so dass ein Eingreifen des Gegensperrmittels in unterschiedlichen Drehstellungen des abzubremsenden Getriebebauteils ermöglicht ist.

Das Sperrmittel kann vorteilhaft, beispielsweise als Ring, koaxial zu dem abzubremsenden Getriebebauteil angeordnet sein.

Beispielsweise kann das Vorspannmittel in der Weise ausgebildet sein, dass es das Sperrmittel, insbesondere axial, gegen das abzubremsende Getriebebauteil drückt. Insbesondere kann vorteilhaft vorgesehen sein, dass das Vorspannmittel gegen eine Rückstellkraft, beispielsweise eines Magneten und/oder einer Feder, wirkt.

Alternativ kann beispielsweise auch vorgesehen sein, dass das Sperrmittel über das Vorspannmittel reibschlüssig mit dem abzubremsenden Getriebebauteil verbunden ist und sich das Vorspannmittel einerseits an dem Sperrmittel und andererseits an dem abzubremsenden Getriebebauteil abstützt. Das Vorspannmittel kann beispielsweise wenigstens ein vorgespanntes oder vorspannbares Federelement beinhalten.

Zum Einstellen des Vorspannmittels kann beispielsweise eine Spannschraube vorhanden sein, mittels der die Vorspannung der Feder eingestellt werden kann.

Insbesondere kann das Vorspannmittel wenigstens ein Federelement aufweisen, wobei wenigstens ein Teil der Reibkraft durch eine Rückstellkraft des vorgespannten Federelements bewirkt wird.

Das Vorspannmittel kann beispielsweise eine Tellerfeder aufweisen. Bei einer ganz besonders vorteilhaften Ausführung weist das Vorspannmittel ein gewelltes und/oder elastisches und/oder zylinderförmig gebogenes Band, insbesondere Blechband auf. Das Band kann insbesondere radial zwischen dem Sperrmittel einerseits und dem abzubremsenden Getriebebauteil andererseits angeordnet sein. Solange ein vorgegebener Wert des Drehmoments nicht überschritten wird, stellt das vorgespannte Band reibschlüssig eine drehfeste Verbindung zwischen dem Sperrmittel einerseits und dem abzubremsenden Getriebebauteil andererseits her. Wird der vorgegebene Wert überschritten, kann sich das Sperrelement die Reibkraft überwindend relativ zu dem abzubremsenden Getriebebauteil drehen. In ähnlicher Weise kann das Vorspannmittel alternativ auch als vorgespannter, geschlitzter Ring ausgebildet und angeordnet sein.

Bei einer besonderen Ausführung ist die Feststellvorrichtung derart ausgebildet, dass der jeweils gewählte Schaltzustand auch dann zuverlässig erhalten bleibt, wenn die Stromversorgung ausfällt oder abgeschaltet ist. Beispielsweise kann die Feststellvorrichtung hierzu eine Permanentmagnetanordnung aufweisen, die ein Verriegelungsbauteil nach einem Umschaltvorgang, bei dem von der Freigabestellung in die Verriegelungsstellung geschaltet wurde, in der Verriegelungsstellung hält und die das Verriegelungsbauteil nach einem Umschaltvorgang, bei dem von der Verriegelungsstellung in die Freigabestellung geschaltet wurde, in der Freigabestellung hält, wobei die Umschaltvorrichtung bei einem Umschaltvorgang dem von der Permanentmagnetanordnung verursachten Magnetfeld ein Umschaltmagnetfeld überlagert.

Eine solche Feststellvorrichtung hat den Vorteil, dass sie unabhängig von einer Stromversorgung bistabil ist, weil ein eingestellter Schaltzustand (Verriegelungsstellung oder Freigabestellung) von der Permanentmagnetanordnung zuverlässig solange erhalten wird, bis das Verriegelungsbauteil in den jeweils anderen Schaltzustand umgeschaltet wird.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an ein Abtriebselement des Spannungswellengetriebes angekoppelt ist. Die zwei mittels des motorisierten Gelenks beweglich verbundenen Träger können beispielsweise Teil eines Roboterarmes sein.

Bei einer besonderen Ausführung weist das Gelenk zwei relativ zueinander bewegliche Gehäuseteile auf, wobei der Antriebsmotor in einem der Gehäuseteile angeordnet ist und das Getriebe in dem anderen Gehäuseteil angeordnet ist. Alternativ oder zusätzlich kann auch vorgesehen sein, dass ein Teil des Getriebes in einem der Gehäuseteile angeordnet ist und ein anderer Teil des Getriebes in dem anderen Gehäuseteil angeordnet ist, oder dass die Feststellvorrichtung in demselben Gehäuseteil angeordnet ist, wie das Getriebe oder wenigstens wie das unmittelbar abzubremsende Bauteil des Getriebes. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente sowohl des Antriebsmotors, als auch des Getriebes und der Feststellvorrichtung aufnehmen muss.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil fungiert und/oder dass ein Gehäuse eines zweiten Trägers zusätzlich auch als zweites Gehäuseteil fungiert.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, stets senkrecht zu dem anderen Träger angeordnet ist.

Insbesondere kann das das Gelenk als Scharniergelenk ausgebildet sein. Unter einem Scharniergelenk wird ein Gelenk verstanden, das eine Drehbewegung in, insbesondere ausschließlich, einem Freiheitsgrad zulässt.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines motorisierten Gelenks zum Verbinden von zwei relativ zueinander beweglichen Trägern,
- Fig. 2: ein zweites Ausführungsbeispiel eines motorisierten Gelenks zum Verbinden von zwei relativ zueinander befindlichen Trägern,
- Fig. 3: ein drittes Ausführungsbeispiel zum Verbinden von zwei relativ zueinander beweglichen Trägern,
- Fig. 4: ein viertes Ausführungsbeispiel eines motorisierten Gelenks zum Verbinden von zwei relativ zueinander beweglichen Trägern.
- Fig. 5: ein fünftes Ausführungsbeispiel eines motorisierten Gelenks zum Verbinden von zwei relativ zueinander beweglichen Trägern,
- Fig. 6: ein sechstes Ausführungsbeispiel eines motorisierten Gelenks zum Verbinden von zwei relativ zueinander befindlichen Trägern,
- Fig. 7: ein siebentes Ausführungsbeispiel zum Verbinden von zwei relativ zueinander beweglichen Träger,
- Fig. 8: ein achtes Ausführungsbeispiel eines motorisierten Gelenks zum Verbinden von zwei relativ zueinander beweglichen Trägern,
- Fig. 9: ein neuntes Ausführungsbeispiel eines motorisierten Gelenks zum Verbinden von zwei relativ zueinander beweglichen Trägern, und
- Fig. 10 bis 17: unterschiedliche Ausführungsbeispiele eines motorisierten Gelenks mit einem Vorspannmittel.

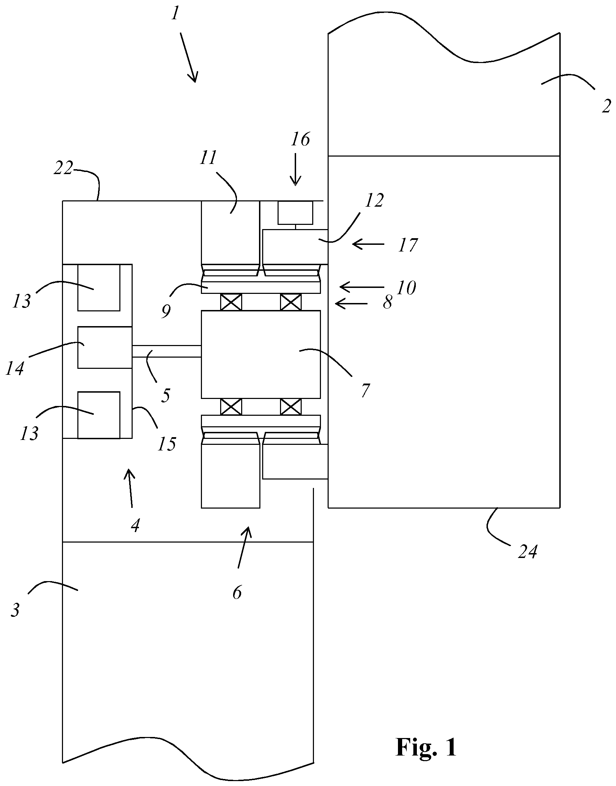

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten. Das motorisierte Gelenk beinhaltet einen Antriebsmotor 4 mit einer Abtriebswelle 5, sowie ein dem Antriebsmotor 4 triebtechnisch nachgeschaltes Getriebe 6. Das Getriebe 6 ist als Spannungswellengetriebe ausgebildet.

Das motorisierte Gelenk 1 weist ein erstes Gehäuseteil 24 und ein zweites Gehäuseteil 22 auf. Das erste Gehäuseteil 24 ist starr mit dem ersten Träger 2 verbunden, während das zweite Gehäuseteil 22 starr mit dem zweiten Träger 3 verbunden ist. Es ist alternativ auch möglich, dass ein Gehäuse des ersten Trägers zusätzlich auch als erstes Gehäuseteil fungiert und/oder dass ein Gehäuse des zweiten Trägers zusätzlich auch als zweites Gehäuseteil fungiert.

Das Getriebe 6 weist ein drehfest mit der Abtriebswelle 5 des Antriebsmotors 4 verbundenes Antriebselement 7, nämlich einen Wellengenerator auf. Der Wellengenerator ist mittels eines radialflexiblen Wälzlagers 8 in einer radialflexiblen, außenverzahnten Büchse 9 (Flexspline) gelagert, die ein Zwischenelement 10 des Getriebes 6 bildet. Das Antriebselement 7 ist elliptisch ausgebildet und überträgt seine elliptische Form über das radialflexible Wälzlager 8 auf die radialflexible außenverzahnte Büchse 9, die auf einander gegenüberliegenden Seiten entlang der Hochachse der Ellipse in Zahneingriff mit einem ersten, starren, innenverzahnten Stützring 11 (Dynamic Spline) steht. Der erste Stützring 11 ist über das zweite Gehäuseteil 22 drehfest mit dem zweiten Träger 3. Der erste Stützring 11 kann insbesondere dieselbe Zähnezahl aufweisen, wie die radialflexible außenverzahnte Büchse 9.

Darüber hinaus weist das Getriebe 6 einen zweiten starren, innenverzahnten Stützring 12 (Circular Spline) auf, der ebenfalls in Zahneingriff mit der radialflexiblen außenverzahnten Büchse 9 steht. Der zweite Stützring 12 weist eine höhere Anzahl von Zähnen auf, als die radialflexible außenverzahnte Büchse 9, so dass es bei einer Drehung des Antriebselements 7 automatisch zu einer Relativdrehung des zweiten Stützrings 12 relativ zu der radialflexiblen außenverzahnten Büchse 9 kommt.

Der zweite Stützring 12 ist über das erste Gehäuseteil 24 drehfest mit dem ersten beweglichen Träger 2 verbunden.

Der Antriebsmotor 4 beinhaltet einen Stator 13 und einen Rotor 14. Der Rotor 14 ist drehfest mit der Abtriebswelle 5 verbunden. Ein Antriebsmotorgehäuse 15 ist drehfest an dem zweiten Gehäuseteil 22 befestigt. Der Stator 13 ist ortsfest in dem Antriebsmotorgehäuse 15 angeordnet.

Mittels des Antriebsmotors 4 kann das Antriebselement 7 in Rotation versetzt werden, was zu einer Relativdrehung des mit dem ersten Träger 2 verbundenen zweiten Stützrings 12 führt, so dass sich der erste Träger 2 und der zweite Träger 3 relativ zueinander bewegen.

Das motorisierte Gelenk 1 weist außerdem eine Feststellvorrichtung 16 auf, die dazu ausgebildet und angeordnet ist, den als Abtriebselement 17 fungierenden zweiten Stützring 12 abzubremsen und zu arretieren.

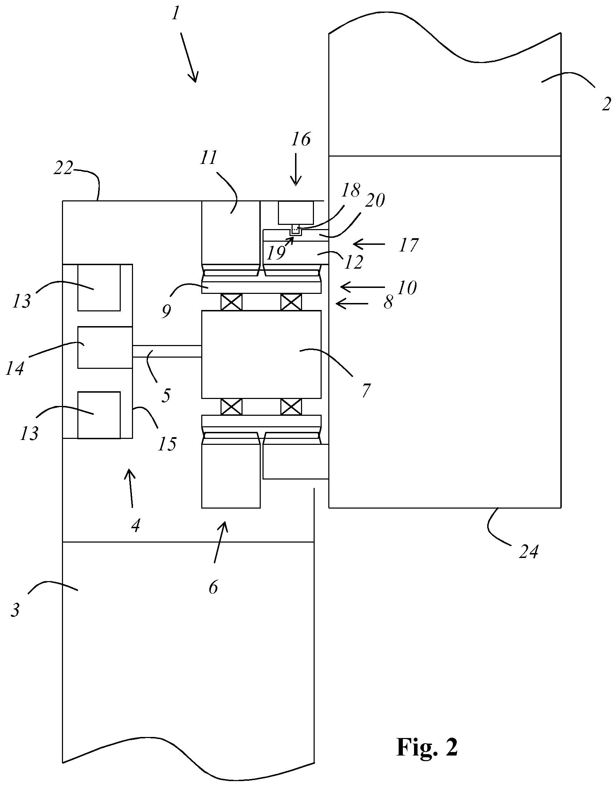

Dies kann, wie in Figur 2 schematisch dargestellt ist, beispielsweise dergestalt erfolgen, dass ein in radialer Richtung beweglicher Sperrenstift 18 in eine Rastausnehmung 19 eines reibschlüssig mit dem zweiten Stützring 12 verbundenen Sperrmittels 20 eingreift. Zum Lösen der Feststellvorrichtung wird der Sperrenstift 18, beispielsweise durch Magnetkraft, radial nach außen bewegt, wodurch das freie Ende des Sperrenstiftes 18 und die Rastausnehmung 19 außer Eingriff kommen.

Die Feststellvorrichtung 16 ist drehfest in dem zweiten Gehäuseteil 22 und drehfest zu dem zweiten Träger 3 angeordnet. Insoweit kann ein bei einem Bremsvorgang auftretendes Bremsmoment unmittelbar auf das zweite Gehäuseteil 22 abgeleitet werden, ohne dass es zu einer Belastung der übrigen Bauteile des Getriebes 6 kommt. Insbesondere ist die Abtriebswelle 5 des Antriebsmotors 4 bei einem Abbremsvorgang von den durch das Abbremsen hervorgerufenen Drehmomenten entkoppelt.

Das Sperrmittel 20 weist auf seinem Außenumfang verteilt mehrere Rastausnehmungen 19 auf, so dass ein Eingreifen des Sperrenstiftes 18 in unterschiedlichen Drehstellungen des zweiten Stützrings 12 ermöglicht ist.

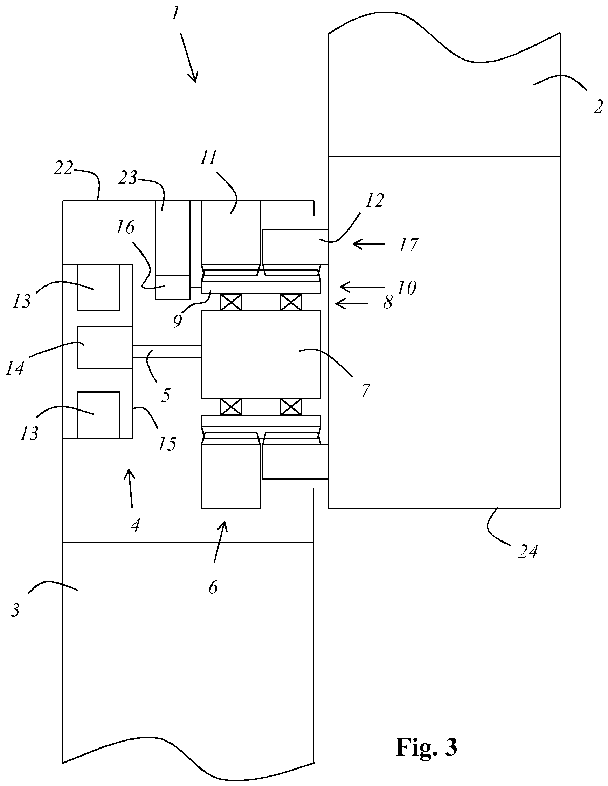

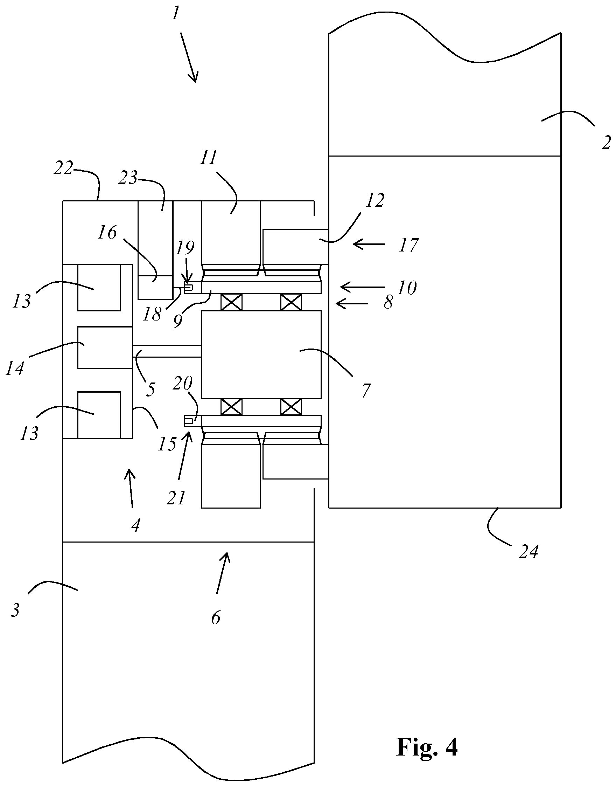

Figur 3 zeigt ein drittes Ausführungsbeispiel eines erfindungsgemäßen motorisierten Gelenks. Bei dieser Ausführung wirkt die mittels eines Halters 23 drehfest mit dem zweiten Gehäuseteil 22 verbundene Feststellvorrichtung 16 auf die als Zwischenelement 10 fungierende radialflexible außenverzahnte Büchse 9. Dies kann, wie schematisch in Figur 4 dargestellt, beispielsweise in der Weise realisiert sein, dass ein axial beweglicher Sperrenstift 18 in eine Rastausnehmung 19 eines als Sperrring 21 ausgebildeten Sperrmittels 20, das reibschlüssig mit der radialflexiblen, außenverzahnten Büchse 9 verbunden ist, eingreift. Zum Lösen der Sperrvorrichtung wird das freie Ende des Sperrenstiftes 18 axial aus der Rastausnehmung 19 heraus bewegt.

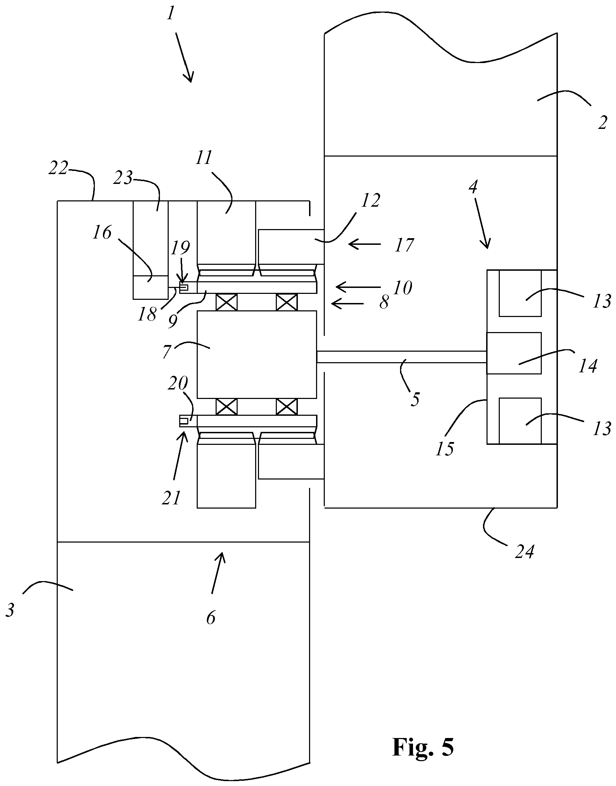

Figur 5 zeigt ein fünftes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist der Antriebsmotor 4 in dem ersten Gehäuseteil 24 angeordnet, während das Getriebe 6 und die Feststellvorrichtung 16 in dem zweiten Gehäuseteil 22 angeordnet sind.

Der erste Stützring 11 ist über das zweite Gehäuseteil 22 mit dem zweiten Träger 3 starr verbunden, während der zweite Stützring über das erste Gehäuseteil 24 starr mit dem ersten Träger 2 verbunden ist.

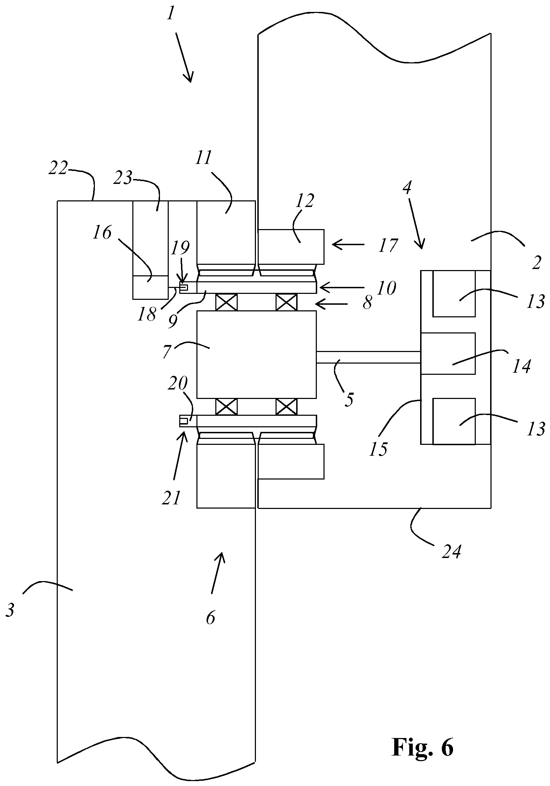

Figur 6 zeigt ein sechstes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel sind der Antriebsmotor 4 und ein Teil des Getriebes 6 in dem ersten Gehäuseteil 24 angeordnet, während der andere Teil des Getriebes 6 und die Feststellvorrichtung 16 in dem zweiten Gehäuseteil 22 angeordnet sind.

Bei diesem Ausführungsbeispiel fungiert ein Gehäuse des ersten Trägers zusätzlich auch als erstes Gehäuseteil 24 und ein Gehäuse des zweiten Trägers zusätzlich auch als zweites Gehäuseteil 22.

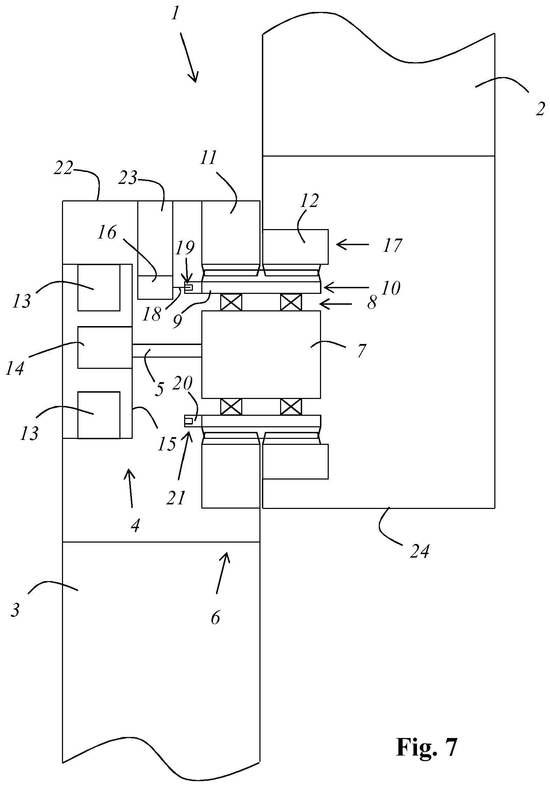

Figur 7 zeigt ein siebentes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist ein Teil des Getriebes 6 in dem ersten Gehäuseteil 24 angeordnet, während der Antriebsmotor 4 und der andere Teil des Getriebes 6 sowie die Feststellvorrichtung 16 in dem zweiten Gehäuseteil 22 angeordnet sind.

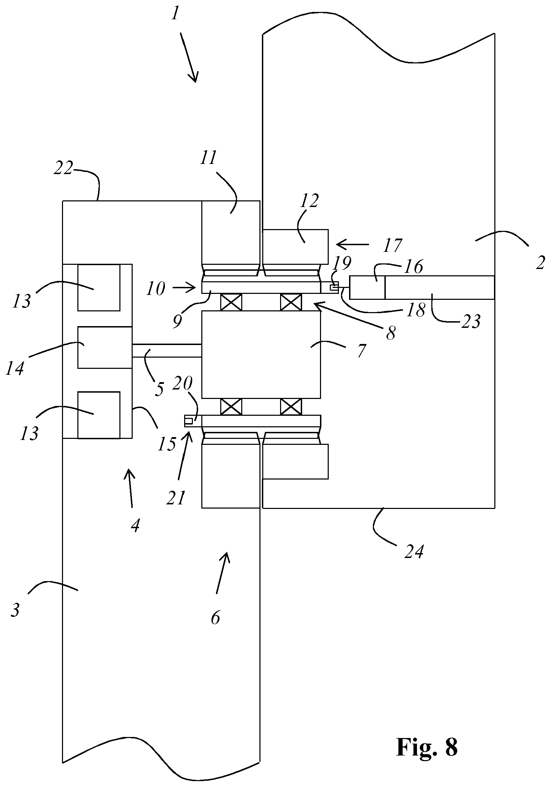

Figur 8 zeigt ein achtes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel sind ein Teil des Getriebes 6 und die Feststellvorrichtung 16 in dem ersten Gehäuseteil 24 angeordnet, während der Antriebsmotor 4 und der andere Teil des Getriebes 6 in dem zweiten Gehäuseteil 22 angeordnet sind.

Bei diesem Ausführungsbeispiel fungiert ein Gehäuse des ersten Trägers zusätzlich auch als erstes Gehäuseteil 24 und ein Gehäuse des zweiten Trägers zusätzlich auch als zweites Gehäuseteil 22.

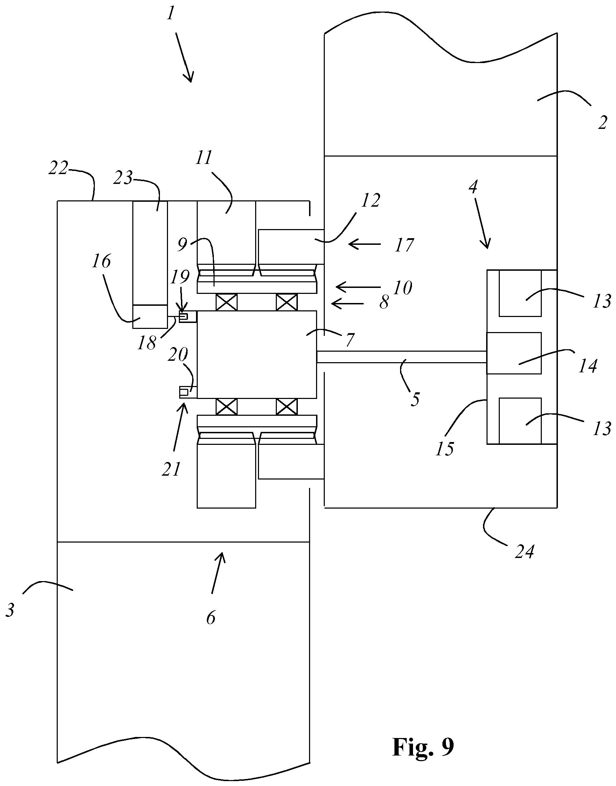

Figur 9 zeigt ein neuntes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist der Antriebsmotor 4 in dem ersten Gehäuseteil 24 angeordnet, während das Getriebe 6 und die Feststellvorrichtung 16 in dem zweiten Gehäuseteil 22 angeordnet sind. Der erste Stützring 11 ist über das zweite Gehäuseteil 22 mit dem zweiten Träger 3 starr verbunden, während der zweite Stützring über das erste Gehäuseteil 24 starr mit dem ersten Träger 2 verbunden ist.

Bei dieser Ausführung wirkt die mittels eines Halters 23 drehfest mit dem zweiten Gehäuseteil 22 verbundene Feststellvorrichtung 16 auf das Antriebselement 7, nämlich den Wellengenerator. Dies ist in der Weise realisiert, dass ein axial beweglicher Sperrenstift 18 in eine Rastausnehmung 19 eines als Sperrring 21 ausgebildeten Sperrmittels 20, das, beispielsweise reibschlüssig, mit dem Antriebselement 7 verbunden ist, eingreift. Zum Lösen der Sperrvorrichtung wird das freie Ende des Sperrenstiftes 18 axial aus der Rastausnehmung 19 heraus bewegt.

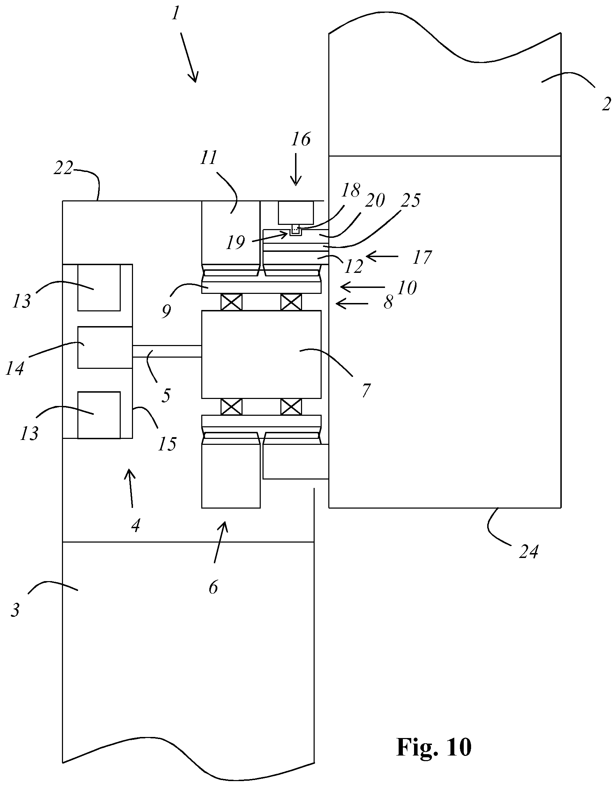

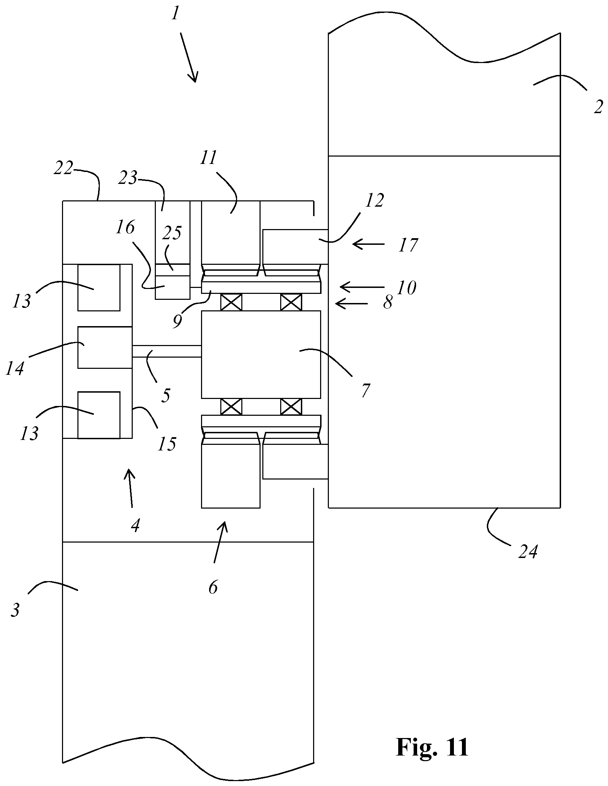

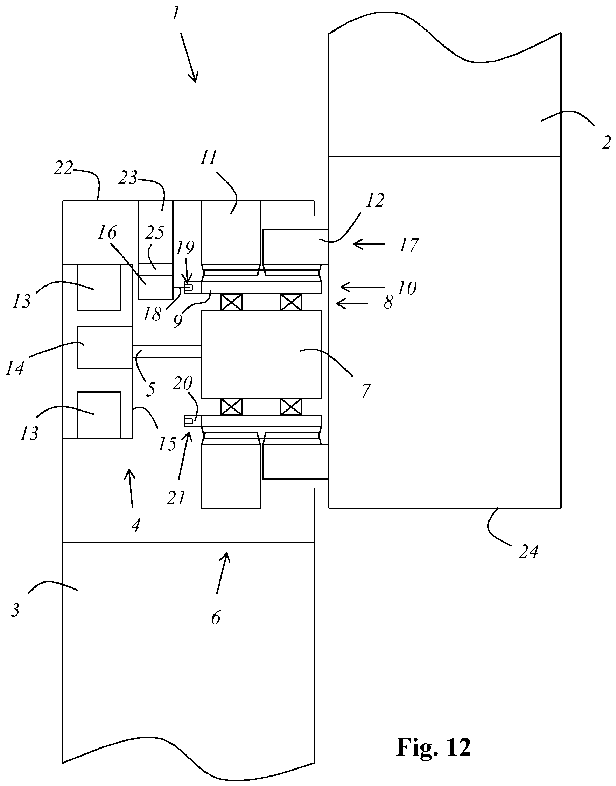

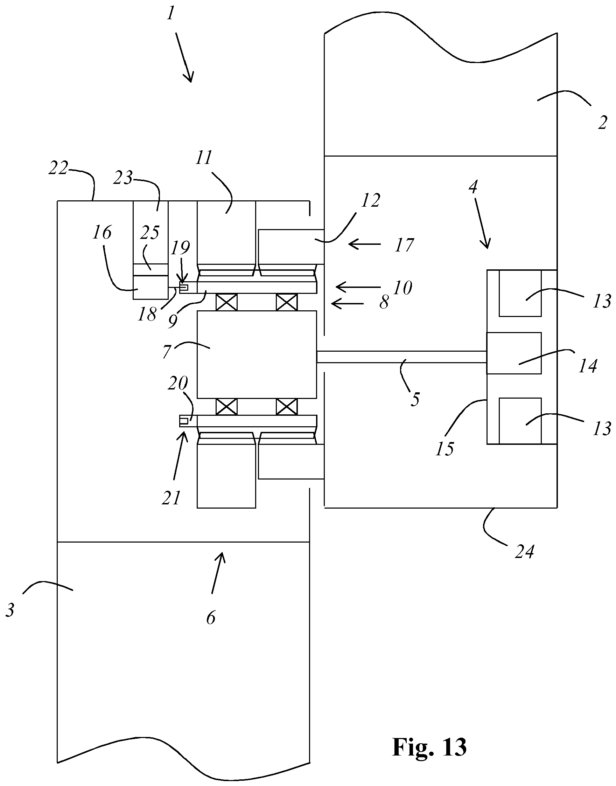

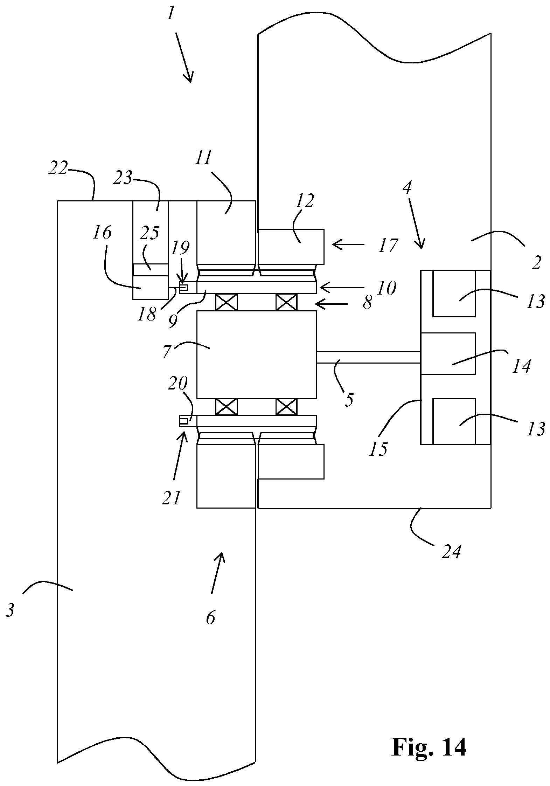

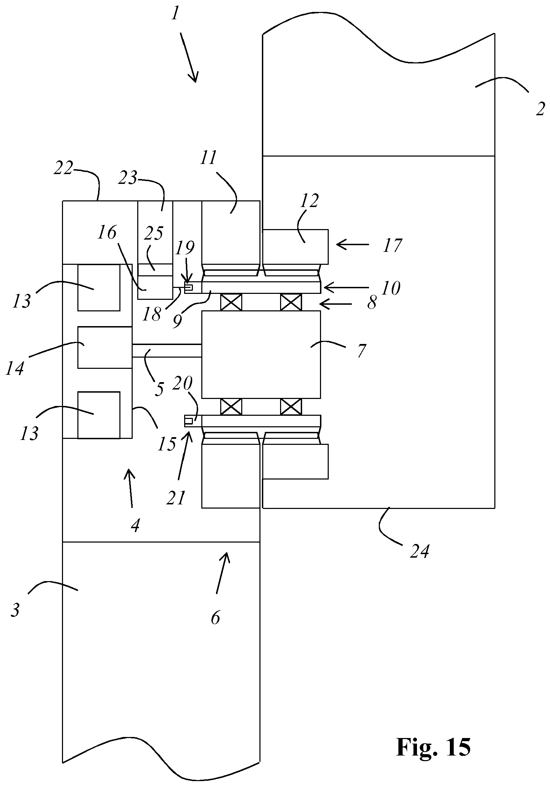

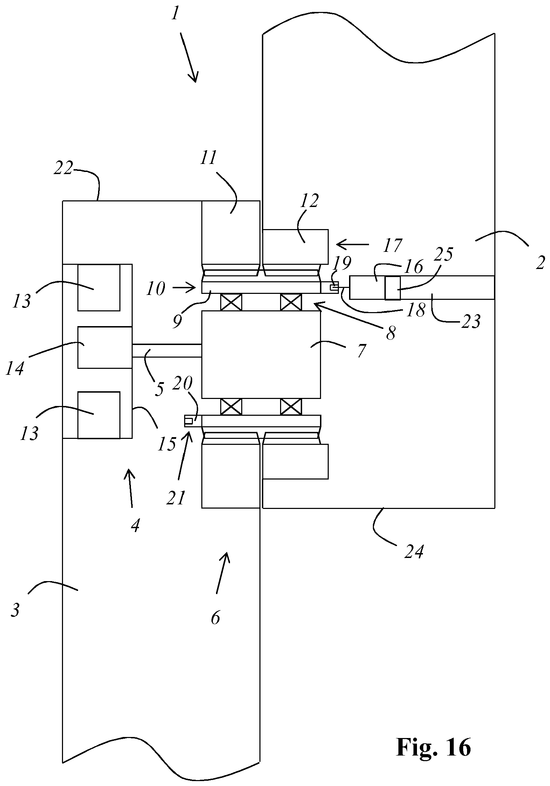

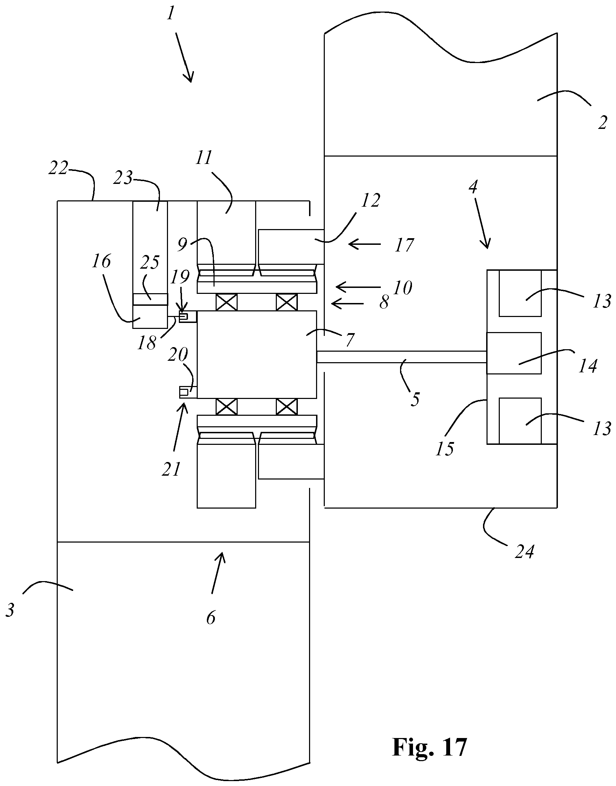

Bei den dargestellten Ausführungsbeispielen kann vorteilhaft ein, insbesondere einstellbares, Vorspannmittel 25 zum Erzeugen oder zum Erhöhen der Reibkraft zwischen dem Sperrmittel 20 einerseits und dem abzubremsenden Getriebebauteils andererseits vorhanden sein, wie dies die Figuren 10 bis 17 illustrieren. Die Ausführungen der Figuren 10 bis 17 entsprechen im Übrigen den Ausführungen gemäß den Figuren 2 bis 9. Das Vorspannmittel 25 kann beispielsweise eine Tellerfeder oder ein gewelltes und/oder elastisches und/oder zylinderförmig gebogenes Band oder einen geschlitzten Ring aufweisen.

### Bezugszeichenliste:

- 1: Motorisiertes Gelenk
- 2: Erster Träger
- 3: Zweiter Träger
- 4: Antriebsmotor
- 5: Abtriebswelle
- 6: Getriebe
- 7: Antriebselement
- 8: Radialflexibles Wälzlager
- 9: Radialflexible, außenverzahnte Büchse
- 10: Zwischenelement
- 11: Erster Stützring
- 12: Zweiter Stützring
- 13: Stator
- 14: Rotor
- 15: Antriebsmotorgehäuse
- 16: Feststellvorrichtung
- 17: Abtriebselement
- 18: Sperrenstift
- 19: Rastausnehmung
- 20: Sperrmittel
- 21: Sperrring
- 22: Zweites Gehäuseteil
- 23: Halter
- 24: Erstes Gehäuseteil
- 25: Vorspannmittel

## Patentansprüche

1. Motorisiertes Gelenk (1) zum Verbinden von zwei relativ zueinander beweglichen Trägern (2, 3) eines programmierbaren Bewegungsautomaten, das einen Antriebsmotor (4) und eine Feststellvorrichtung (16) aufweist, wobei dem Antriebsmotor (4) ein Spannungswellengetriebe triebtechnisch nachgeschaltet ist und die Feststellvorrichtung (16) dazu ausgebildet und angeordnet ist, unmittelbar ein Getriebebauteil des Spannungswellengetriebes abzubremsen und zu arretieren, und wobei die Feststellvorrichtung (16) ein reibschlüssig mit dem mittels der Feststellvorrichtung abbremsbaren Getriebebauteil verbundenes Sperrmittel (20) aufweist, welches wenigstens ein Formschlussmittel aufweist, das im zugeschalteten Zustand der Feststellvorrichtung (16) formschlüssig mit einem relativ zu einem Gehäuse oder einem Chassis drehfesten Gegenformschlussmittel zusammen wirkt, wobei
a. zum Erzeugen oder zum Erhöhen der Reibkraft ein einstellbares Vorspannmittel (25) oder ein Vorspannmittel (25), das eine Tellerfeder oder ein gewelltes und/oder elastisches und/oder zylinderförmig gebogenes Band, insbesondere Blechband, oder einen geschlitzten Ring aufweist, vorhanden ist, und/oder
b. das Gegenformschlussmittel einen radial bewegbaren Sperrenstift (18) aufweist, dessen freies Ende in zugeschaltetem Zustand der Feststellvorrichtung (16) in eine Rastausnehmung des Formschlussmittels eingreift.

2. Motorisiertes Gelenk (1) nach Anspruch 1, **dadurch gekennzeichnet, dass**
a. das mittels des Feststellvorrichtung (16) abbremsbare und arretierbare Getriebebauteil ein Wellengenerator des Spannungswellengetriebes ist oder dass das mittels des Feststellvorrichtung (16) abbremsbare und arretierbare Getriebebauteil ein Flexspline des Spannungswellengetriebes ist oder dass das mittels des Feststellvorrichtung (16) abbremsbare und arretierbare Getriebebauteil ein Circularspline oder ein Dynamicspline des Spannungswellengetriebes ist, und/oder dass
b. das Spannungswellengetriebe als Topfgetriebe ausgebildet ist oder dass das Spannungswellengetriebe als Ringgetriebe ausgebildet ist.

3. Motorisiertes Gelenk (1) nach Anspruch 1 oder 2, **dadurch gekennzeichnet, dass**
a. die Feststellvorrichtung (16) im zugeschalteten Zustand bei Auftreten eines abtriebsseitigen Drehmomentes mit einem Wert über einem vorgegebenen oder vorgebbaren Wert zur Vermeidung einer Beschädigung eines Abtriebselements (17) des Spannungswellengetriebes und der weiteren im Kraftfluss liegenden Bauteile des motorisierten Gelenks (1) eine Bewegung des mittels des Feststellvorrichtung (16) arretierten Getriebebauteils zulässt, oder dass
b. die Feststellvorrichtung (16) im zugeschalteten Zustand bei Auftreten eines abtriebsseitigen Drehmomentes mit einem Wert über einem vorgegebenen oder vorgebbaren Wert zur Vermeidung einer Beschädigung eines Abtriebselements (17) des Spannungswellengetriebes und der weiteren im Kraftfluss liegenden Bauteile des motorisierten Gelenks (1) eine Bewegung des mittels des Feststellvorrichtung (16) arretierten Getriebebauteils zulässt, wobei der vorgegebene Wert dem maximal zulässigen Betriebsdrehmoment, das an dem zu arretierenden Bauteil auftreten darf entspricht und/oder dass der vorgegebene Wert derart gewählt, dass eine Beschädigung des Gelenks (1) und/oder des Getriebes (6) ausgeschlossen ist.

4. Motorisiertes Gelenk (1) nach einem der Ansprüche 1 bis 3, **dadurch gekennzeichnet, dass** die Feststellvorrichtung (16) als reibschlüssige Bremse ausgebildet ist oder eine reibschlüssige Bremse aufweist.

5. Motorisiertes Gelenk (1) nach einem der Ansprüche 1 bis 4, **dadurch gekennzeichnet, dass** die Feststellvorrichtung (16) eine Scheibenbremse aufweist.

6. Motorisiertes Gelenk (1) nach Anspruch 5, **gekennzeichnet durch**
a. eine Bremsscheibe, die drehfest mit dem mittels der Feststellvorrichtung (16) abbremsbaren und arretierbaren Getriebebauteil verbunden ist, und **durch** einen Bremskrafterzeuger, der auf die Bremsscheibe wirkt und sich direkt oder indirekt an einem Gehäuse oder einem Chassis abstützt, oder **durch**
b. eine Bremsscheibe, die drehfest mit dem mittels der Feststellvorrichtung (16) abbremsbaren und arretierbaren Getriebebauteil verbunden ist, und **durch** einen Bremskrafterzeuger, der auf die Bremsscheibe wirkt und sich direkt oder indirekt an einem Gehäuse oder einem Chassis abstützt, wobei die Bremsscheibe drehfest, jedoch in axialer Richtung verschiebbar auf einem mit dem mittels der Feststellvorrichtung (16) abbremsbaren und arretierbaren Getriebebauteil verbundenen Mitnehmer gelagert ist, oder **durch**
c. eine Bremsscheibe, die drehfest mit dem mittels der Feststellvorrichtung (16) abbremsbaren und arretierbaren Getriebebauteil verbunden ist, und **durch** einen Bremskrafterzeuger, der auf die Bremsscheibe wirkt und sich direkt oder indirekt an einem Gehäuse oder einem Chassis abstützt, wobei der Bremskrafterzeuger im zugeschalteten Zustand der Feststellvorrichtung (16) ein Reibelement axial gegen die Bremsscheibe drückt oder **durch**
d. eine Bremsscheibe, die drehfest mit dem mittels der Feststellvorrichtung (16) abbremsbaren und arretierbaren Getriebebauteil verbunden ist, und **durch** einen Bremskrafterzeuger, der auf die Bremsscheibe wirkt und sich direkt oder indirekt an einem Gehäuse oder einem Chassis abstützt, wobei der Bremskrafterzeuger im zugeschalteten Zustand der Feststellvorrichtung (16) ein Reibelement radial gegen die Bremsscheibe drückt, oder **durch**
e. eine Bremsscheibe, die drehfest mit dem mittels der Feststellvorrichtung (16) abbremsbaren und arretierbaren Getriebebauteil verbunden ist, und **durch** einen Bremskrafterzeuger, der auf die Bremsscheibe wirkt und sich direkt oder indirekt an einem Gehäuse oder einem Chassis abstützt, wobei der Bremskrafterzeuger wenigstens einen Magneten, insbesondere einen Permanentmagneten und/oder einen Elektromagneten, und/oder wenigstens ein Federelement aufweist.

7. Motorisiertes Gelenk (1) nach einem der Ansprüche 1 bis 6, **dadurch gekennzeichnet, dass**
a. zum Lösen der Feststellvorrichtung (16) eine Lösevorrichtung vorhanden ist, oder dass
b. zum Lösen der Feststellvorrichtung (16) eine Lösevorrichtung vorhanden ist, die elektrisch aktivierbar ist, oder dass
c. zum Lösen der Feststellvorrichtung (16) eine Lösevorrichtung vorhanden ist, die einen Elektromagneten aufweist.

8. Motorisiertes Gelenk (1) nach einem der Ansprüche 1 bis 7, **dadurch gekennzeichnet, dass** das Sperrmittel (20) koaxial zu dem mittels der Feststellvorrichtung (16) abbremsbaren Getriebebauteil angeordnet ist.

9. Motorisiertes Gelenk (1) nach einem der Ansprüche 1 bis 8, **dadurch gekennzeichnet, dass**
a. das Vorspannmittel (25) das Sperrmittel (20), insbesondere axial, gegen das mittels der Feststellvorrichtung (16) abbremsbare Getriebebauteil drückt, oder dass
b. das Sperrmittel (20) über das Vorspannmittel (25) reibschlüssig mit dem mittels der Feststellvorrichtung (16) abbremsbaren Getriebebauteil verbunden ist und sich das Vorspannmittel (25) einerseits an dem Sperrmittel (20) und andererseits an dem mittels der Feststellvorrichtung (16) abbremsbaren Getriebebauteil abstützt.

10. Motorisiertes Gelenk (1) nach einem der Ansprüche 1 bis 9, **dadurch gekennzeichnet, dass** das Gelenk zwei relativ zueinander bewegliche Gehäuseteile (22, 24) aufweist, wobei
a. der Antriebsmotor (4) in einem der Gehäuseteile (22, 24) angeordnet ist und das Getriebe in dem anderen Gehäuseteil (22, 24) angeordnet ist, oder
b. ein Teil des Getriebes in einem der Gehäuseteile (22, 24) angeordnet ist und ein anderer Teil des Getriebes in dem anderen Gehäuseteil (22, 24) angeordnet ist, oder
c. die Feststellvorrichtung (16) in demselben Gehäuseteil (22, 24) angeordnet ist, wie das Getriebe (6) oder wenigstens wie das unmittelbar abzubremsende Bauteil des Getriebes (6).

11. Motorisiertes Gelenk (1) nach einem der Ansprüche 1 bis 10, **dadurch gekennzeichnet, dass**
a. das Gelenk (1) dazu ausgebildet ist, zwei Träger (2, 3) derart zu verbinden, dass die Ebene, in der sich einer der Träger (2, 3) bewegt, und die Ebene, in der sich der andere Träger (2, 3) bewegt, stets parallel zueinander angeordnet sind, oder dass
b. das Gelenk (1) als Scharniergelenk ausgebildet ist, oder dass
c. das Gelenk (1) dazu ausgebildet ist, zwei Träger (2, 3) derart zu verbinden, dass die Ebene, in der sich einer der Träger (2, 3) bewegt, stets senkrecht zu dem anderen Träger (2, 3) angeordnet ist.

12. Programmierbarer Bewegungsautomat mit zwei mittels eines motorisierten Gelenks (1) nach einem der Ansprüche 1 bis 11 relativ zueinander beweglich verbundenen Trägern(2, 3).

13. Programmierbarer Bewegungsautomat nach Anspruch 12, **dadurch gekennzeichnet, dass** einer der Träger (2, 3) direkt oder indirekt drehfest mit einem Stator (13) des Antriebsmotors (4) und/oder einem Antriebsmotorgehäuse des Antriebsmotors (4) verbunden ist und dass der andere Träger (2, 3) drehfest an das Abtriebselement (17) des Getriebes (6) angekoppelt ist.

14. Programmierbarer Bewegungsautomat nach Anspruch 12 oder 13, **dadurch gekennzeichnet, dass** die zwei mittels des motorisierten Gelenks (1) beweglich verbundenen Träger (2, 3) Teil eines Roboterarmes sind.

15. Programmierbarer Bewegungsautomat nach einem der Ansprüche 12 bis 14, **dadurch gekennzeichnet, dass** das Gelenk (1) zwei relativ zueinander bewegliche Gehäuseteile (22, 24) aufweist, wobei
a. einer der Träger (2, 3) mit einem der Gehäuseteile (22, 24) fest verbunden ist und der andere Träger (2, 3) mit dem anderen Gehäuseteil (22, 24) fest verbunden ist, oder wobei
b. eines der Gehäuseteile (22, 24) Bestandteil eines der Träger (2, 3) ist, oder wobei
c. eines der Gehäuseteile (22, 24) Bestandteil eines Gehäuses eines der Träger (2, 3) ist und das andere Gehäuseteil (22, 24) Bestandteil eines Gehäuses des anderen Trägers (2, 3) ist.

## Claims

1. Motorized joint (1) for connecting two carriers (2, 3) of a programmable automatic moving device, which carriers (2, 3) can be moved relative to one another and which automatic moving device has a drive motor (4) and a locking apparatus (16), wherein a strain wave gear mechanism is connected downstream of the drive motor (4) in drive terms and the locking apparatus (16) is configured and arranged to directly brake and lock a gear mechanism component of the strain wave gear mechanism, and wherein the locking apparatus (16) has a locking means (20) which is connected in a frictionally locking manner to the gear mechanism component which can be braked by means of the locking apparatus, which locking means (20) has at least one positively locking means which, in the switched-on state of the locking apparatus (16), interacts in a positively locking manner with a corresponding positively locking means which is rotationally fixed relative to a housing or a chassis, wherein
a. there is an adjustable prestressing means (25) or a prestressing means (25) which has a plate spring or a corrugated and/or elastic and/or cylindrically curved strip, in particular a sheet metal strip, or a slotted ring for generating or for increasing the frictional force, and/or
b. the corresponding positively locking means has a radially movable lock pin (18), the free end of which engages into a latching recess of the positively locking means in the switched-on state of the locking apparatus (16).

2. Motorized joint (1) according to Claim 1, **characterized in that**
a. the gear mechanism component which can be braked and can be locked by means of the locking apparatus (16) is a wave generator of the strain wave gear mechanism, or **in that** the gear mechanism component which can be braked and can be locked by means of the locking apparatus (16) is a flex spline of the strain wave gear mechanism, or **in that** the gear mechanism component which can be braked and can be locked by means of the locking apparatus (16) is a circular spline or a dynamic spline of the strain wave gear mechanism, and/or **in that**
b. the strain wave gear mechanism is configured as a cup-type gear mechanism, or **in that** the strain wave gear mechanism is configured as a ring gear mechanism.

3. Motorized joint (1) according to Claim 1 or 2, **characterized in that**
a. the locking apparatus (16), in the switched-on state in the case of the occurrence of an output-side torque with a value above a predefined or predefinable value, permits a movement of the gear mechanism component which is locked by means of the locking apparatus (16), in order to avoid damage of an output element (17) of the strain wave gear mechanism and the further components of the motorized joint (1) which lie in the power train, or **in that**
b. the locking apparatus (16), in the switched-on state in the case of the occurrence of an output-side torque with a value above a predefined or predefinable value, permits a movement of the gear mechanism component which is locked by means of the locking apparatus (16), in order to avoid damage of an output element (17) of the strain wave gear mechanism and the further components of the motorized joint (1) which lie in the power train, wherein the predefined value corresponds to the maximum permissible operating torque which may occur at the component to be locked, and/or in that the predefined value is selected in such a way that damage of the joint (1) and/or the transmission (6) is ruled out.

4. Motorized joint (1) according to one of Claims 1 to 3, **characterized in that** the locking apparatus (16) is configured as a frictionally locking brake or has a frictionally locking brake.

5. Motorized joint (1) according to one of Claims 1 to 4, **characterized in that** the locking apparatus (16) has a disc brake.

6. Motorized joint (1) according to Claim 5, **characterized by**
a. a brake disc which is connected in a rotationally fixed manner to the gear mechanism component which can be braked and can be locked by means of the locking apparatus (16), and by a brake booster which acts on the brake disc and is directly or indirectly supported on a housing or a chassis, or by
b. a brake disc which is connected in a rotationally fixed manner to the gear mechanism component which can be braked and can be locked by means of the locking apparatus (16), and by a brake booster which acts on the brake disc and is directly or indirectly supported on a housing or a chassis, wherein the brake disc is mounted in a rotationally fixed manner but displaceably in the axial direction on a driver which is connected to the gear mechanism component which can be braked and can be locked by means of the locking apparatus (16), or by
c. a brake disc which is connected in a rotationally fixed manner to the gear mechanism component which can be braked and can be locked by means of the locking apparatus (16), and by a brake booster which acts on the brake disc and is directly or indirectly supported on a housing or a chassis, wherein the brake booster presses a friction element axially against the brake disc in the switched-on state of the locking apparatus (16), or by
d. a brake disc which is connected in a rotationally fixed manner to the gear mechanism component which can be braked and can be locked by means of the locking apparatus (16), and by a brake booster which acts on the brake disc and is directly or indirectly supported on a housing or a chassis, wherein the brake booster presses a friction element radially against the brake disc in the switched-on state of the locking apparatus (16), or by
e. a brake disc which is connected in a rotationally fixed manner to the gear mechanism component which can be braked and can be locked by means of the locking apparatus (16), and by a brake booster which acts on the brake disc and is directly or indirectly supported on a housing or a chassis, wherein the brake booster has at least one magnet, in particular a permanent magnet and/or an electromagnet, and/or at least one spring element.

7. Motorized joint (1) according to one of Claims 1 to 6, **characterized in that**
a. there is a release apparatus for releasing the locking apparatus (16), or **in that**
b. there is a release apparatus for releasing the locking apparatus (16), which release apparatus can be electrically activated, or **in that**
c. there is a release apparatus for releasing the locking apparatus (16), which release apparatus has an electromagnet.

8. Motorized joint (1) according to one of Claims 1 to 7, **characterized in that** the locking means (20) is arranged coaxially with respect to the gear mechanism component which can be braked by means of the locking apparatus (16).

9. Motorized joint (1) according to one of Claims 1 to 8, **characterized in that**
a. the prestressing means (25) presses the locking means (20), in particular axially, against the gear mechanism component which can be braked by means of the locking apparatus (16), or **in that**
b. the locking means (20) is connected in a frictionally locking manner via the prestressing means (25) to the gear mechanism component which can be braked by means of the locking apparatus (16), and the prestressing means (25) is supported on one side on the locking means (20) and on the other side on the gear mechanism component which can be braked by means of the locking apparatus (16).

10. Motorized joint (1) according to one of Claims 1 to 9, **characterized in that** the joint has two housing parts (22, 24) which can be moved relative to one another, wherein
a. the drive motor (4) is arranged in one of the housing parts (22, 24), and the transmission is arranged in the other housing part (22, 24), or
b. a part of the transmission is arranged in one of the housing parts (22, 24), and another part of the transmission is arranged in the other housing part (22, 24), or
c. the locking apparatus (16) is arranged in the same housing part (22, 24) as the transmission (6) or at least as that component of the transmission (6) which is to be directly braked.

11. Motorized joint (1) according to one of Claims 1 to 10, **characterized in that**
a. the joint (1) is configured to connect two carriers (2, 3) in such a way that the plane in which one of the carriers (2, 3) moves and the plane in which the other carrier (2, 3) moves are always arranged parallel to one another, or **in that**
b. the joint (1) is configured as a hinged joint, or in that
c. the joint (1) is configured to connect two carriers (2, 3) in such a way that the plane in which one of the carriers (2, 3) moves is always arranged perpendicularly in relation to the other carrier (2, 3) .

12. Programmable automatic moving device having two carriers (2, 3) which are connected such that they can be moved relative to one another by means of a motorized joint (1) according to one of Claims 1 to 11.

13. Programmable automatic moving device according to Claim 12, **characterized in that** one of the carriers (2, 3) is directly or indirectly connected in a rotationally fixed manner to a stator (13) of the drive motor (4) and/or a drive motor housing of the drive motor (4), and **in that** the other carrier (2, 3) is coupled in a rotationally fixed manner to the output element (17) of the transmission (6).

14. Programmable automatic moving device according to Claim 12 or 13, **characterized in that** the two carriers (2, 3) which are connected such that they can be moved by means of the motorized joint (1) are part of a robot arm.

15. Programmable automatic moving device according to one of Claims 12 to 14, **characterized in that** the joint (1) has two housing parts (22, 24) which can be moved relative to one another, wherein
a. one of the carriers (2, 3) is fixedly connected to one of the housing parts (22, 24), and the other carrier (2, 3) is fixedly connected to the other housing part (22, 24), or wherein
b. one of the housing parts (22, 24) is a constituent part of one of the carriers (2, 3), or wherein
c. one of the housing parts (22, 24) is a constituent part of a housing of one of the carriers (2, 3), and the other housing part (22, 24) is a constituent part of a housing of the other carrier (2, 3).

## Revendications

1. Articulation motorisée (1) destinée à relier deux supports (2, 3) mobiles l'un par rapport à l'autre d'un automate de déplacement programmable, laquelle comporte un moteur d'entraînement (4) et un dispositif de blocage (16), dans laquelle un engrenage à onde de déformation est disposé en entraînement en aval du moteur d'entraînement (4) et le dispositif de blocage (16) est conçu et agencé pour freiner et arrêter directement un composant de transmission de l'engrenage à onde de déformation, et dans laquelle le dispositif de blocage (16) comporte un moyen de verrouillage (20) relié au composant de transmission freinable au moyen du dispositif de blocage, comportant au moins un moyen de complémentarité de formes, lequel coopère par complémentarité de formes avec un contre-moyen de complémentarité de forme fixe en rotation par rapport à un boîtier ou un châssis dans l'état enclenché du dispositif de blocage (16), dans laquelle
a. un moyen de précontrainte (25) réglable ou un moyen de précontrainte (25) comportant un ressort à disque ou une bande ondulée et/ou élastique et/ou cintrée en forme de cylindre, en particulier une bande de tôle, ou une bague fendue est présent pour obtenir ou pour augmenter la force de friction, et/ou
b. le contre-moyen de complémentarité de forme comporte une goupille de verrouillage (18) radialement mobile, dont l'extrémité libre entre en prise dans un évidement d'accrochage du moyen de complémentarité de formes dans l'état enclenché du dispositif de blocage (16) .

2. Articulation motorisée (1) selon la revendication 1, **caractérisée en ce que**
a. le composant de transmission freinable et arrêtable au moyen du dispositif de blocage (16) est un générateur d'onde de l'engrenage à onde de déformation ou **en ce que** le composant de transmission freinable et arrêtable au moyen du dispositif de blocage (16) est un Flexspline de l'engrenage à onde de déformation ou **en ce que** le composant de transmission freinable et arrêtable au moyen du dispositif de blocage (16) est un Circularspline ou un Dynamicspline de l'engrenage à onde de déformation, et/ou **en ce que**
b. l'engrenage à onde de déformation est conçu comme engrenage en godet ou **en ce que** l'engrenage à onde de déformation est conçu comme engrenage annulaire.

3. Articulation motorisée (1) selon la revendication 1 ou 2, **caractérisée en ce que**
a. le dispositif de blocage (16) à l'état enclenché autorise, s'il se produit côté sortie un couple d'une valeur supérieure à une valeur prédéfinie ou pouvant être prédéfinie, un mouvement du composant de transmission arrêté au moyen du dispositif de blocage (16) afin d'éviter un endommagement d'un élément de sortie (17) de l'engrenage à onde de déformation et des composants de l'articulation motorisée (1) situés plus loin dans le flux de force, ou **en ce que**
b. le dispositif de blocage (16) à l'état enclenché autorise, s'il se produit côté sortie un couple d'une valeur supérieure à une valeur prédéfinie ou pouvant être prédéfinie, un mouvement du composant de transmission arrêté au moyen du dispositif de blocage (16) afin d'éviter un endommagement d'un élément de sortie (17) de l'engrenage à onde de déformation et des composants de l'articulation motorisée (1) situés plus loin dans le flux de force, dans laquelle la valeur prédéfinie correspond au couple maximal autorisé pouvant se produire sur le composant à arrêter et/ou **en ce que** la valeur prédéfinie est choisie de façon à exclure un endommagement de l'articulation (1) et/ou de la transmission (6).

4. Articulation motorisée (1) selon l'une des revendications 1 à 3, **caractérisée en ce que** le dispositif de blocage (16) est réalisé comme frein à friction ou comporte un frein à friction.

5. Articulation motorisée (1) selon l'une des revendications 1 à 4, **caractérisée en ce que** le dispositif de blocage (16) comporte un frein à disque.

6. Articulation motorisée (1) selon la revendication 5, **caractérisée par**
a. un disque de frein, lequel est relié de manière fixe en rotation au composant de transmission freinable et arrêtable au moyen du dispositif de blocage (16), et par un générateur de force de freinage, lequel opère sur le disque de frein et s'appuie directement ou indirectement sur un boîtier ou un châssis, ou par
b. un disque de frein, lequel est relié de manière fixe en rotation au composant de transmission freinable et arrêtable au moyen du dispositif de blocage (16), et par un générateur de force de freinage, lequel opère sur le disque de frein et s'appuie directement ou indirectement sur un boîtier ou un châssis, dans laquelle le disque de frein est disposé sur de manière fixe en rotation mais capable de coulisser dans la direction axiale sur un entraîneur relié au composant de transmission freinable et arrêtable au moyen du dispositif de blocage (16), ou par
c. un disque de frein, lequel est relié de manière fixe en rotation au composant de transmission freinable et arrêtable au moyen du dispositif de blocage (16), et par un générateur de force de freinage, lequel opère sur le disque de frein et s'appuie directement ou indirectement sur un boîtier ou un châssis, dans laquelle le générateur de force de freinage pousse un élément de friction axialement contre le disque de frein dans l'état enclenché du dispositif de blocage (16), ou par
d. un disque de frein, lequel est relié de manière fixe en rotation au composant de transmission freinable et arrêtable au moyen du dispositif de blocage (16), et par un générateur de force de freinage, lequel opère sur le disque de frein et s'appuie directement ou indirectement sur un boîtier ou un châssis, dans laquelle le générateur de force de freinage pousse un élément de friction radialement contre le disque de frein dans l'état enclenché du dispositif de blocage (16), ou par
e. un disque de frein, lequel est relié de manière fixe en rotation au composant de transmission freinable et arrêtable au moyen du dispositif de blocage (16), et par un générateur de force de freinage, lequel opère sur le disque de frein et s'appuie directement ou indirectement sur un boîtier ou un châssis, dans laquelle le générateur de force de freinage comporte au moins un aimant, en particulier un aimant permanent et/ou un électroaimant, et/ou au moins un élément de ressort.

7. Articulation motorisée (1) selon l'une des revendications 1 à 6, **caractérisée en ce que**
a. un dispositif de libération est présent pour libérer le dispositif de blocage (16), ou **en ce que**
b. un dispositif de libération, lequel est électriquement activable, est présent pour libérer le dispositif de blocage (16), ou **en ce que**
c. un dispositif de libération, lequel comporte un électroaimant, est présent pour libérer le dispositif de blocage (16).

8. Articulation motorisée (1) selon l'une des revendications 1 à 7, **caractérisée en ce que** le moyen de verrouillage (20) est agencé de manière coaxiale par rapport au composant de transmission freinable au moyen du dispositif de blocage (16).

9. Articulation motorisée (1) selon l'une des revendications 1 à 8, **caractérisée en ce que**
a. le moyen de précontrainte (25) presse le moyen de verrouillage (20), en particulier axialement, contre le composant de transmission freinable au moyen du dispositif de blocage (16), ou **en ce que**
b. le moyen de verrouillage (20) est relié par friction au composant de transmission freinable au moyen du dispositif de blocage (16) par le biais du moyen de précontrainte (25) et le moyen de précontrainte (25) s'appuie d'un côté sur le moyen de verrouillage (20) et de l'autre côté sur le composant de transmission freinable au moyen du dispositif de blocage (16).

10. Articulation motorisée (1) selon l'une des revendications 1 à 9, **caractérisée en ce que** l'articulation comporte deux parties de boîtier (22, 24) mobiles l'une par rapport à l'autre, dans laquelle
a. le moteur d'entraînement (4) est agencé dans une des parties de boîtier (22, 24) et la transmission est agencée dans l'autre partie de boîtier (22, 24), ou
b. une partie de la transmission est agencée dans une des parties de boîtier (22, 24) et une autre partie de la transmission est agencée dans l'autre partie de boîtier (22, 24), ou
c. le dispositif de blocage (16) est agencé dans la même partie de boîtier (22, 24) que la transmission (6) ou au moins que le composant de la transmission (6) à freiner directement.

11. Articulation motorisée (1) selon l'une des revendications 1 à 10, **caractérisée en ce que**
a. l'articulation (1) est réalisée de façon à relier deux supports (2, 3) de telle sorte que le plan dans lequel se meut un des supports (2, 3) et le plan dans lequel se meut l'autre support (2, 3) sont toujours agencés parallèlement l'un à l'autre, ou **en ce que**
b. l'articulation (1) est réalisée comme articulation charnière, ou **en ce que**
c. l'articulation (1) est réalisée de façon à relier deux supports (2, 3) de telle sorte que le plan dans lequel se meut un des supports (2, 3) est toujours agencé perpendiculairement à l'autre support (2, 3).

12. Automate de déplacement programmable doté de deux supports (2, 3) reliés de façon mobile l'un par rapport à l'autre au moyen d'une articulation motorisée (1) selon l'une des revendications 1 à 11.

13. Automate de déplacement programmable selon la revendication 12, **caractérisé en ce qu'**un des supports (2, 3) est relié directement ou indirectement de manière fixe en rotation à un stator (13) du moteur d'entraînement (4) et/ou à un boîtier de moteur d'entraînement du moteur d'entraînement (4) et **en ce que** l'autre support (2, 3) est couplé de manière fixe à l'élément de sortie (17) de la transmission (6).

14. Automate de déplacement programmable selon la revendication 12 ou 13, **caractérisé en ce que** les deux supports (2, 3) reliés de façon mobile au moyen de l'articulation motorisée (1) sont une partie d'un bras robot.

15. Automate de déplacement programmable selon l'une des revendications 12 à 14, **caractérisé en ce que** l'articulation (1) comporte deux parties de boîtier (22, 24) mobiles l'une par rapport à l'autre, dans lequel
a. un des supports (2, 3) est relié fixement à une des parties de boîtier (22, 24) et l'autre support (2, 3) est relié fixement à l'autre partie de boîtier (22, 24), ou dans lequel
b. une des parties de boîtier (22, 24) est une pièce d'un des supports (2, 3), ou dans lequel
c. une des parties de boîtier (22, 24) est une pièce d'un boîtier d'un des supports (2, 3) et l'autre partie de boîtier (22, 24) est une pièce d'un boîtier de l'autre support (2, 3).
